(19) Europäisches Patentamt
European Patent Office
Office européen des brevets

(11) EP 4 141 057 A1

# (12) EUROPEAN PATENT APPLICATION

(43) Date of publication:
**01.03.2023 Bulletin 2023/09**

(21) Application number: **21192888.2**

(22) Date of filing: **24.08.2021**

(51) International Patent Classification (IPC):
***C08K 3/04*** *(2006.01)*

(52) Cooperative Patent Classification (CPC):
(C-Sets available)
**H01B 3/307; C08K 3/04;** C08K 2201/006 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SHPP Global Technologies B.V.**
**4612 PX Bergen op Zoom (NL)**

(72) Inventors:
- **SONG, Yang**
  **Shanghai (CN)**
- **ZHANG, Shen**
  **Shanghai (CN)**
- **SONG, Shijie**
  **Shanghai (CN)**

(74) Representative: **Dehns**
**St. Bride's House**
**10 Salisbury Square**
**London EC4Y 8JD (GB)**

## (54) THERMOPLASTIC COMPOSITIONS INCLUDING LOW DIELECTRIC CARBON BLACK AS A SIGNAL TRANSMISSION COMPONENT

(57) A thermoplastic compositions include: a polymer base resin having a dissipation factor (Df) of 0.004 or lower at a frequency of at least 1 gigahertz (GHz) as tested using a resonant cavity method; and a low-OAN carbon black having an oil absorption number (OAN) of 60 cubic centimeters per 100 grams (cc/100g) or less. The polymer base resin may include a liquid crystal polymer (LCP) resin and/or polyphenylene ether (PPE) resin. The compositions have good dielectric properties.

EP 4 141 057 A1

(52) Cooperative Patent Classification (CPC): (Cont.)

C-Sets
**C08K 3/04, C08L 67/00;**
**C08K 3/04, C08L 71/12**

## Description

### FIELD OF THE DISCLOSURE

The present disclosure relates to low dielectric thermoplastics, and in particular to thermoplastic compositions including a low dissipation factor (Df) polymer base resin and a low oil absorption number (OAN) carbon black.

### BACKGROUND OF THE DISCLOSURE

Low dielectric thermoplastics are useful in the telecommunications industry, particularly in 5G applications which have high bandwidth, high frequency and high speed requirements. Thermoplastics for use in these applications should have low dielectric constant (Dk) and low dissipation factor (Df) properties. Particular telecommunications requiring such thermoplastics include antenna, insulator, high frequency connector, and framework applications. Liquid crystal polymers (LCP) are considered as a promising material for 5G telecommunication applications, as they have high heat resistance, high flow, low dimensional stability, low water uptake and low dielectric properties. For example, neat LCP resin has a dissipation factor between 0.001 to 0.003 and may be applied as a film for flexible circuit boards. LCP compounds are used for injection-molded parts such as connectors, antennas etc.; these compounds have a dissipation factor between about 0.003 and 0.005. Ideal Df values for these compounds are typically restricted to natural color grades, but unfortunately black or dark black color grades are often required for certain final finish goods such as connectors, consumer electronics supports. etc. Black/dark color grades of LCPs suffer a loss in dielectric properties due to the use of carbon black, which is electrically conductive and has poor dielectric properties. And in particular when used with LCPs a higher amount of carbon black is required for darker color matching as compared to the carbon black content required in other thermoplastic polymers. The higher carbon black content results in a further negative impact on the dielectric properties of LCP compounds including them.

These and other shortcomings are addressed by aspects of the present disclosure.

### SUMMARY

Aspects of the disclosure relate to thermoplastic compositions including: a polymer base resin having a dissipation factor (Df) of 0.004 or lower at a frequency of at least 1 gigahertz (GHz) as tested using a resonant cavity method; and a low-OAN carbon black having an oil absorption number (OAN) of 60 cubic centimeters per 100 grams (cc/100g) or less. The polymer base resin may include at least one liquid crystal polymer (LCP) resin and/or at least one polyphenylene ether (PPE) resin. The compositions have good dielectric properties.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

FIGS. 1A and 1B are graphs showing dielectric constant (Dk) and dissipation factor (Df) as a function of frequency for comparative and example compositions according to aspects of the present disclosure.

### DETAILED DESCRIPTION

In the present disclosure low Df thermoplastic compositions include a carbon black which demonstrates a much lower destructive effect on dissipation factor in a frequency range over 1 GHz. Inclusion of the described carbon black allows the thermoplastic compositions to satisfy color matching requirements while maintaining low Df properties. Specifically, the present disclosure can be understood more readily by reference to the following detailed description of the disclosure and the Examples included therein. In various aspects, the present disclosure pertains to thermoplastic compositions including: a polymer base resin having a dissipation factor (Df) of 0.004 or lower at a frequency of at least 1 gigahertz (GHz) as tested using a resonant cavity method; and a low-OAN carbon black having an oil absorption number (OAN) of 60 cubic centimeters per 100 grams (cc/100g) or less. The compositions have good dielectric properties.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations

of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

**Definitions**

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a liquid crystal polymer resin" includes mixtures of two or more liquid crystal polymer resins.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i^{\,2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

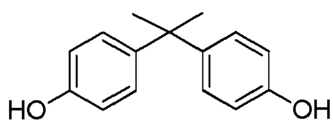

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified.

That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Thermoplastic Compositions

Aspects of the disclosure relate to thermoplastic compositions including: a polymer base resin having a dissipation factor (Df) of 0.004 or lower at a frequency of at least 1 gigahertz (GHz) as tested using a resonant cavity method; and a low-OAN carbon black having an oil absorption number (OAN) of 60 cubic centimeters per 100 grams (cc/100g) or less. The low-OAN carbon black having an OAN of 60 cc/100g or less is referred to herein as "Special carbon black" or "Special CB." A conventional carbon black ("Conventional CB") is a carbon black having an OAN of greater than 60 cc/100g, including a carbon black having an OAN of greater than 70 cc/100g.

In some aspects the composition includes from about 10 wt% to 99.9 wt% of the polymer base resin; in specific aspects the composition includes from about 10 wt% to about 90 wt% of the polymer base resin.

The polymer base resin has in some aspects a Df of 0.004 or lower at a frequency of from 1 GHz to 20 GHz. In further aspects the polymer base resin has a Df or 0.004 or lower at a frequency of 1 GHz to 5 GHz, or at a frequency of 1.9 GHz to 5 GHz. In certain aspects the polymer base resin includes at least one liquid crystal polymer (LCP) resin and/or at least one polyphenylene ether (PPE) resin.

The composition may include from at least 0.1 wt% to 10 wt% of the low-OAN carbon black (the "Special CB").

In some aspects the low-OAN carbon black is chemically treated, such as acid treated, to decrease its surface conductivity and increase its dielectric properties.

In particular aspects the composition includes at least one additional additive. The at least one additional additive may include, but is not limited to, an acid scavenger, an anti-drip agent, an antioxidant, an antistatic agent, a chain extender, a colorant, a de-molding agent, a flow promoter, a lubricant, a mold release agent, a plasticizer, a quenching agent, a flame retardant, a UV reflecting additive, an impact modifier, a blowing agent, a filler, a reinforcing agent, or a combination thereof. Exemplary fillers include, but are not limited to, glass fiber, glass flake, glass bead, hollow glass beads, talc, mica, kaolin, whisker, ceramic, and combinations thereof. The at least one additional additive may be added in any amount that does not materially affect the desired dielectric, color and other (e.g., mechanical) properties of the thermoplastic composition.

Thermoplastic compositions according to aspects of the disclosure have a Df at a frequency of from 1-20 GHz as tested in accordance with a resonant cavity method that is within 0.002 of that of a reference composition tested at the same frequency that includes an equivalent amount of polymer base resin instead of the low-OAN carbon black. As used herein, a "reference composition" has the same components as the described composition except for inclusion of indicated component (e.g., low-OAN carbon black). The omitted component is replaced by either the equivalent amount of a conventional component (e.g., low-OAN carbon black is replaced with same amount of Conventional CB) or with an equivalent amount of base resin (e.g., low-OAN carbon black is replaced with the same amount of base resin (e.g., LCP or PPE)).

In some aspects the composition has a Df at a frequency of from 1-20 GHz as tested in accordance with a resonant cavity method that is within 0.001 of that of a reference composition tested at the same frequency that includes an equivalent amount of polymer base resin instead of the low-OAN carbon black.

In further aspects the composition has a Df at a frequency of from 1-20 GHz as tested in accordance with a resonant cavity method that is at least 10% lower than that of a reference composition tested at the same frequency that includes an equivalent amount of Conventional Carbon Black instead of the low-OAN carbon black. In specific aspects the composition has a Df at a frequency of from 1-20 GHz as tested in accordance with a resonant cavity method that is at least 20% lower, or at least 30% lower, or at least 40% lower, or at least 50% lower, or at least 100% lower, or at least 200% lower, or at least 300% lower, or at least 400% lower, than that of a reference composition tested at the same frequency that includes an equivalent amount of Conventional Carbon Black instead of the low-OAN carbon black.

In other aspects the composition has an L* value of less than 55 as tested in accordance with ASTM D1238. In particular aspects the composition has an L* value of less than 50, or less than 45, or less than 40, or from 10-55, or from 10-50, or from 10-45, or from 10-40, as tested in accordance with ASTM D1238.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:

a polymer base resin having a dissipation factor (Df) of 0.004 or lower at a frequency of at least 1 gigahertz (GHz) as tested using a resonant cavity method; and

a low-OAN carbon black having an oil absorption number (OAN) of 60 cubic centimeters per 100 grams (cc/100g) or less.

Aspect 2. The thermoplastic composition according to Aspect 1, wherein the composition comprises from about 10 wt% to 99.9 wt% of the polymer base resin.

Aspect 3. The thermoplastic composition according to Aspect 1 or 2, wherein the composition comprises from at least 0.1 wt% to 10 wt% of the low-OAN carbon black.

Aspect 4. The thermoplastic composition according to any of Aspects 1 to 3, wherein the polymer base resin has a Df of 0.004 or lower at a frequency of from 1 GHz to 20 GHz.

Aspect 5. The thermoplastic composition according to any of Aspects 1 to 4, wherein the low-OAN carbon black is acid treated to decrease its surface conductivity and increase its dielectric properties.

Aspect 6. The thermoplastic composition according to any of Aspects 1 to 5, wherein the composition comprises at least one additional additive.

Aspect 7. The thermoplastic composition according to Aspect 6, wherein the at least one additional additive comprises an acid scavenger, an anti-drip agent, an antioxidant, an antistatic agent, a chain extender, a colorant, a de-molding agent, a flow promoter, a lubricant, a mold release agent, a plasticizer, a quenching agent, a flame retardant, a UV reflecting additive, an impact modifier, a blowing agent, a filler, a reinforcing agent, or a combination thereof.

Aspect 8. The thermoplastic composition according to Aspect 7, wherein the filler comprises glass fiber, glass flake, glass bead, hollow glass beads, talc, mica, kaolin, whisker, ceramic, or a combination thereof.

Aspect 9. The thermoplastic composition according to any of Aspects 1 to 8, wherein the polymer base resin comprises at least one liquid crystal polymer (LCP) resin.

Aspect 10. The thermoplastic composition according to any of Aspects 1 to 9, wherein the polymer base resin comprises at least one polyphenylene ether (PPE) resin.

Aspect 11. The thermoplastic composition according to any of Aspects 1 to 10, wherein the composition has a Df at a frequency of from 1-20 GHz as tested in accordance with a resonant cavity method that is within 0.002 of that of a reference composition tested at the same frequency that comprises an equivalent amount of polymer base resin instead of the low-OAN carbon black.

Aspect 12. The thermoplastic composition according to any of Aspects 1 to 11, wherein the composition has a Df at a frequency of from 1-20 GHz as tested in accordance with a resonant cavity method that is within 0.001 of that of a reference composition tested at the same frequency that comprises an equivalent amount of polymer base resin instead of the low-OAN carbon black.

Aspect 13. The thermoplastic composition according to any of Aspects 1 to 12, wherein the composition has a Df at a frequency of from 1-20 GHz as tested in accordance with a resonant cavity method that is at least 10% lower than that of a reference composition tested at the same frequency that comprises an equivalent amount of Conventional Carbon Black instead of the low-OAN carbon black.

Aspect 14. The thermoplastic composition according to any of Aspects 1 to 13, wherein the composition has an L* value of less than 55 as tested in accordance with ASTM D1238.

Aspect 15. An article comprising the thermoplastic composition according to any of Aspects 1 to 14.

Aspect 16. The article of Aspect 15, wherein the article is a component of a telecommunications device.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Components used in comparative and example compositions are listed in Table 1:

**Table 1 - Material List**

| Component | Description | Supplier |
|---|---|---|
| Type I LCP | Liquid crystal polymer (LCP) resin having a Df of 0.003 at 1 GHz or higher | Haidi |
| Type II LCP | LCP resin having a Df of 0.002 at 1 GHz or higher | PRET |
| PPE | Noryl™ PX500 polyphenylene ether (PPE) resin | SABIC |
| GF | ECS3098 glass fiber | CPIC |
| Conventional CB | Conventional M800 CB having an OAN of 74 cc/100g | CABOT |

(continued)

| Component | Description | Supplier |
|---|---|---|
| Special CB | Low Dk/Df CB having an OAN of 49 cc/100g | |
| Mica | White mica | Yamaguchi |

Oil absorption number (OAN) is measured as cubic centimeters per 100 grams (cc/100g) and is determined according to ASTM D2414 and ASTM D3493. If not specifically noted, the base resin and carbon black (CB) were fed from the main feeder and fiber or minerals were fed via a side feeder. The compounding proceeded with a screw rotation of 250-350 revolutions per minute (rpm) with a throughput of 30-40 kilograms per hour (kg/hr) of throughput. The torque was maintained at 30-40% to provide a good yield rate (>90%).

The temperature profiles and molding conditions for are shown in Tables 2 and 3:

**Table 2 - Extruder Temperature Profile**

| Parameters | Unit | |
|---|---|---|
| Compounder Type | | TEM-37BS |
| Barrel Size | mm | 1500 |
| Die | mm | 3 |
| Feed (Zone 0) Temp | °C | 50 |
| Zone 1 Temp | °C | 80 |
| Zone 2 Temp | °C | 180 |
| Zone 3 Temp | °C | 250 |
| Zone 4 Temp | °C | 335-345 |
| Zone 5 Temp | °C | 335-345 |
| Zone 6 Temp | °C | 335-345 |
| Zone 7 Temp | °C | 335-345 |
| Zone 8 Temp | °C | 335-345 |
| Zone 9 Temp | °C | 335-345 |
| Zone 10 Temp | °C | 335-345 |
| Zone 11 Temp | °C | 335-345 |
| Zone 12 Temp | °C | 330-345 |
| Die Temp | °C | 330-345 |

**Table 3 - Injection Molding Temperatures**

| Molding parameters | unit | Value |
|---|---|---|
| Pre-drying time | Hour | 4 |
| Pre-drying temp | °C | 120-150 |
| Hopper temp | °C | 70 |
| Zone 1 temp | °C | 290 |
| Zone 2 temp | °C | 335-345 |
| Zone 3 temp | °C | 335-345 |
| Zone 3 temp | °C | 335-345 |
| Nozzle temp | °C | 330-345 |

(continued)

| Molding parameters | unit | Value |
|---|---|---|
| Mold temp | °C | 90-120 |

Tensile properties were measured according to ASTM D638 at a test speed of 5 millimeters per minute (mm/min). Flexural properties were measured according to ASTM D790 at a test speed of 1.27mm/min. Impact tests were performed according to ASTM D256 at room temperature (20°C) with a Pendulum Energy of 5 pound force per foot (lbf/ft). Dielectric constant and dissipation factor was tested using a resonant cavity method at frequencies of from 1-20 gigahertz (GHz). L* value was tested using a Color-Eye 7000A instrument and an SCI reflection method.

**Example 1**

Comparative compositions including Conventional CB and example compositions including Special CB were prepared and tested as shown in Table 4:

**Table 4 - Comparative and Example Compositions and their Properties**

| **Item Description** | **C1.0** | **C1.1** | **C1.2** | **Ex1.3** | **C1.4** | **Ex1.5** |
|---|---|---|---|---|---|---|
| Type II LCP | 79 | 78.5 | 77 | 77 | | |
| Type I LCP | | | | | 77 | 77 |
| Special CB | | | | 2 | | 2 |
| Conventional CB | | 0.5 | 2 | | 2 | |
| Mica | 21 | 21 | 21 | 21 | 21 | 21 |
| | | | | | | |
| **Properties** | | | | | | |
| Specific gravity, g/cm$^3$, ASTM D792 | 1.564 | 1.565 | 1.565 | 1.565 | 1.557 | 1.559 |
| HDT at 0.45Mpa, °C, ASTM D648 | 270 | 270 | 270 | 270 | 280 | 280 |
| Notched Izod impact, J/m, ASTM D256 | 60 | 60 | 60 | 100 | 70 | 65 |
| Tensile modulus, MPa, ASTM D638 | 12350 | 12200 | 12860 | 12500 | 13500 | 14100 |
| Tensile strength, MPa, ASTM D638 | 151 | 149 | 150 | 145 | 142 | 145 |
| Tensile elongation, %, ASTM D638 | 3.7 | 3.8 | 3.5 | 3.8 | 3.2 | 3 |
| Flexural modulus, MPa, ASTM D790 | 11500 | 11300 | 11800 | 11400 | 12400 | 12000 |
| Flexural strength, MPa, ASTM D790 | 170 | 172 | 173 | 171 | 154 | 151 |
| L* value, ASTM D1238 | 78 | 52.6 | 44.1 | 40 | 41.2 | 38.9 |
| Dk, 1.9 GHz | 3.8 | 3.9 | 4.1 | 3.9 | 4.2 | 4.0 |
| Df, 1.9 GHz | 0.0022 | 0.0045 | 0.013 | 0.0028 | 0.019 | 0.0042 |

For the compositions of Example 1 the effect of different color black components on color (L*) and dielectric performance was evaluated. Mica content was maintained constant. Two different LCP neat resins were selected. The M800 carbon black is a common carbon black used in many thermoplastic products that require a dark color. Special CB is a special carbon black not previously used in thermoplastics; it has been used in UV coating applications which have poor electrical conductivity. Comparing C1.1 and C1.2 with Conventional CB content increased from 0.5 wt% to 2 wt%, the L* value dropped from 52.6 to 44.1, and Dk varied from 3.9 to 4.1. However, the Df value substantially increased from 0.0045 to 0.013, a poor result. From these results it is concluded that it is not feasible to continue to increase Conventional CB content to improve (reduce) the color (L*) properties due to the adverse effect on dielectric properties (Df). Ex1.3 had the same content of carbon black but included the Special CB. As shown in the results, the L* value is lower than C1.2 and the Dk is 3.9 at 1.9GHz. Significantly, the dissipation factor was substantially improved as compared to C1.2 — the Df was only 0.0028 even with a 2% Special CB content. The effect of including the Special CB is very

small in comparison with natural color control sample (C1.0); the difference in Df between C1.0 and Ex1.3 is only 0.0006, while the Df of C1.2 is about 4 times that of C1.0. In C1.4 and C1.5, the type ILCP resin was used with 2 wt% content of Conventional CB and Special CB. As shown, in comparison with the Type II LCP formulations (C1.2 and Ex1.3), the compositions of C1.4 and Ex1.5 had higher darkness with lower L* value. Further, the Dk and Df properties were correspondingly higher than C1.2 and C1.3 due to the different properties of the LCP resin. The dielectric property (Df) trend with C1.4 and Ex1.5 was similar, with the Df of C1.4 increasing substantially to 0.019 and the composition including the Special CB (Ex1.5) having a Df of 0.0042.

**Example 2**

Additional comparative compositions including Conventional CB and example compositions including Special CB were prepared and tested as shown in Table 5:

**Table 5 - Comparative and Example Compositions and their Properties**

| Item Description | C2.1 | C2.2 | C2.3 | Ex2.4 | Ex2.5 |
|---|---|---|---|---|---|
| Type I LCP | 70 | 69.85 | 69.7 | 69.85 | 69.7 |
| GF | 30 | 30 | 30 | 30 | 30 |
| Special CB | | | | 0.15 | 0.3 |
| Conventional CB | 0 | 0.15 | 0.3 | | |
| **Properties** | | | | | |
| Specific gravity, g/cm$^3$, ASTM D792 | 1.62 | 1.625 | 1.627 | 1.626 | 1.627 |
| HDT at 0.45Mpa, °C, ASTM D648 | 295 | 293 | 297 | 297 | 297 |
| Notched Izod impact, J/m, ASTM D256 | 94 | 90 | 91 | 93 | 95 |
| Tensile modulus, MPa, ASTM D638 | 15900 | 16000 | 16700 | 17200 | 16800 |
| Tensile strength, MPa, ASTM D638 | 166 | 160 | 170 | 170 | 169 |
| Tensile elongation, %, ASTM D638 | 2.1 | 2 | 2 | 2 | 2 |
| Flexural modulus, MPa, ASTM D790 | 13900 | 14700 | 14700 | 15300 | 15500 |
| Flexural strength, MPa, ASTM D790 | 217 | 218 | 225 | 225 | 230 |
| L* value, ASTM D1238 | 79.9 | 56.4 | 50.2 | 52.5 | 47.2 |

As shown in Table 5 the differences between Conventional CB and Special CB were further evaluated in compositions including 30 wt% glass fiber. As shown, there is no substantial difference in mechanical performance between natural color (C2.1), Conventional CB (C2.2 and C2.3) and the Special CB (Ex2.4 and Ex2.5). Comparing color (L*) values, a clear trend is observed that Special CB further increases darkness compared to the same loading of Conventional CB. The L* value decreased from 56.4 (C2.2) to 52.5 (Ex2.4) at a carbon black loading of 0.15 wt%, and from 50.2 (C2.3) to 47.2 (Ex2.5) at a carbon black loading of 0.30 wt%.

A more substantial difference is seen in the dielectric properties of the compositions, as seen in FIGS 1A and 1B and Table 6 below. The Dk and Df properties of these compositions were evaluated at a wide range of frequencies from 1.1 gigahertz (GHz) to 20 GHz. As shown in FIG. 1A, the Dk value is not obviously affected by carbon black at these loadings, ranging from 3.9 to 4. This is consistent with the results observed in Example 1 which had carbon black loadings of up to 2 wt%:

**Table 6 - Dielectric Properties of Example 2 Compositions**

| | Dielectric Constant (Dk) | | | | |
|---|---|---|---|---|---|
| | 1.1 GHz | 1.9 GHz | 5 GHz | 10 GHz | 20 GHz |
| **C2.1** | 3.9 | 3.9 | 3.94 | 3.92 | 3.91 |
| **C2.2** | 3.96 | 3.94 | 3.97 | 3.92 | 3.94 |
| **C2.3** | 3.91 | 3.98 | 3.98 | 3.93 | 3.96 |

(continued)

| | Dielectric Constant (Dk) | | | | |
|---|---|---|---|---|---|
| | **1.1 GHz** | **1.9 GHz** | **5 GHz** | **10 GHz** | **20 GHz** |
| **Ex2.4** | 3.93 | 3.94 | 3.95 | 3.92 | 3.94 |
| **Ex2.5** | 3.94 | 3.95 | 3.97 | 3.93 | 3.95 |
| | **Dissipation Factor (Df)** | | | | |
| | **1.1GHz** | **1.9GHz** | **5GHz** | **10GHz** | **20GHz** |
| **C2.1** | 0.00428 | 0.00416 | 0.00409 | 0.00395 | 0.00454 |
| **C2.2** | 0.00461 | 0.00449 | 0.00496 | 0.00512 | 0.00562 |
| **C2.3** | 0.00497 | 0.00503 | 0.00584 | 0.00625 | 0.00689 |
| **Ex2.4** | 0.00447 | 0.00421 | 0.00431 | 0.00429 | 0.00482 |
| **Ex2.5** | 0.00466 | 0.00436 | 0.00445 | 0.00428 | 0.00475 |

A more substantial effect was observed with respect to Dissipation Factor (Df) as shown in Table 6 and FIG. 1B. Specifically, Ex2.4 and Ex2.5 had a very similar trend and range of Df as C2.1 which does not include any carbon black. This indicates that the Special CB had minimal impact on Df at a frequency range of from 1.1 GHz to 20 GHz. In contrast, C2.2 and C2.3 including Conventional CB had a much greater increase in Df; this effect became more pronounced as frequency was increased. For example, in C2.3 the Df value increased from 0.005 to 0.007 from frequency of 1.1 GHz to 20 GHz. The trend shows that Conventional CB results in increased Df with increased frequencies. This is not desirable for telecommunication applications in which the frequency range has been continually increasing. As a consequence, compositions including the Special CB are more desirable as it has been shown in the present disclosure that the compositions can be darker in color (lower L* value) at the same carbon loading and with minimal impact on dielectric performance.

**Example 3**

Further comparative and example compositions including polyphenylene ether (PPE) as the base thermoplastic resin were prepared and tested as shown in Table 7 below.

**Table 7 - PPE-Based Compositions**

| **Item Description** | **C3.1** | **Ex3.2** | **Ex3.3** | **C3.4** | **C3.5** |
|---|---|---|---|---|---|
| PPE | 100 | 99.5 | 98 | 99.5 | 98 |
| Special CB | | 0.5 | 2 | | |
| Conventional CB | | | | 0.5 | 2 |
| **Dielectric Properties** | | | | | |
| Dk, 1.9 GHz | 2.51 | 2.61 | 2.63 | 2.68 | 2.67 |
| Df, 1.9 GHz | 0.00129 | 0.00128 | 0.00123 | 0.00166 | 0.00218 |
| Dk, 5 GHz | 2.54 | 2.57 | 2.65 | 2.63 | 2.69 |
| Df, 5 GHz | 0.00177 | 0.00171 | 0.00165 | 0.00252 | 0.00339 |

These compositions included Noryl™ PX500 PPE resin from SABIC. This grade of PPE is a commercial PPE grade used in, for example, Advanced Driver Assistance System (ADAS) housing and GPS antennal housing applications. PPE has low Dk and Df properties. In particular, PX500 PPE has a Dk of from about 2.5-2.55 and a Df from about 0.0011-0.0018 at frequencies of from 1.9-5 GHz. From the results shown in Table 7 it was seen that compositions including Conventional CB (C3.4 and C3.5) had a clear increase in Dk and Df properties. Specifically, Dk increased from 2.51 to 2.67 at 1.9 GHz with 2 wt% Conventional CB, and Df increased at 1.9 GHz from 0.00129 to 0.00166, and then to 0.00218 (compare C3.1 with no carbon black to C3.4 and C3.5 with 0.5 and 2 wt% Conventional CB, respectively).

At the higher frequency of 5GHz, the Df increase was even more pronounced, increasing from 0.00177 with no carbon black to 0.00252 at 0.5 wt% Conventional CB, and then to 0.00339 at 2 wt% Conventional CB. These Df values are about 2 times that of the base PPE resin. In comparison, Ex3.2 and Ex3.3 including the Special CB showed substantial improvement in Dk and Df properties at the same carbon black loading. Dk increased by only about 0.1, and Df basically did not change (or even decreased) with the addition of the Special CB. This example further shows that the Special CB can be added to thermoplastic compositions without substantially affecting the dielectric properties of the compositions.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

**1.** A thermoplastic composition comprising:

a polymer base resin having a dissipation factor (Df) of 0.004 or lower at a frequency of at least 1 gigahertz (GHz) as tested using a resonant cavity method; and
a low-OAN carbon black having an oil absorption number (OAN) of 60 cubic centimeters per 100 grams (cc/100g) or less.

**2.** The thermoplastic composition according to claim 1, wherein the composition comprises from about 10 wt% to 99.9 wt% of the polymer base resin.

**3.** The thermoplastic composition according to claim 1 or 2, wherein the composition comprises from at least 0.1 wt% to 10 wt% of the low-OAN carbon black.

**4.** The thermoplastic composition according to any of claims 1 to 3, wherein the polymer base resin has a Df of 0.004 or lower at a frequency of from 1 GHz to 20 GHz.

**5.** The thermoplastic composition according to any of claims 1 to 4, wherein the low-OAN carbon black is acid treated to decrease its surface conductivity and increase its dielectric properties.

**6.** The thermoplastic composition according to any of claims 1 to 5, wherein the composition comprises at least one additional additive.

**7.** The thermoplastic composition according to claim 6, wherein the at least one additional additive comprises an acid scavenger, an anti-drip agent, an antioxidant, an antistatic agent, a chain extender, a colorant, a de-molding agent, a flow promoter, a lubricant, a mold release agent, a plasticizer, a quenching agent, a flame retardant, a UV reflecting additive, an impact modifier, a blowing agent, a filler, a reinforcing agent, or a combination thereof.

**8.** The thermoplastic composition according to any of claims 1 to 7, wherein the polymer base resin comprises at least one liquid crystal polymer (LCP) resin.

**9.** The thermoplastic composition according to any of claims 1 to 8, wherein the polymer base resin comprises at least one polyphenylene ether (PPE) resin.

**10.** The thermoplastic composition according to any of claims 1 to 9, wherein the composition has a Df at a frequency of from 1-20 GHz as tested in accordance with a resonant cavity method that is within 0.002 of that of a reference

composition tested at the same frequency that comprises an equivalent amount of polymer base resin instead of the low-OAN carbon black.

**11.** The thermoplastic composition according to any of claims 1 to 10, wherein the composition has a Df at a frequency of from 1-20 GHz as tested in accordance with a resonant cavity method that is within 0.001 of that of a reference composition tested at the same frequency that comprises an equivalent amount of polymer base resin instead of the low-OAN carbon black.

**12.** The thermoplastic composition according to any of claims 1 to 9, wherein the composition has a Df at a frequency of from 1-20 GHz as tested in accordance with a resonant cavity method that is at least 10% lower than that of a reference composition tested at the same frequency that comprises an equivalent amount of Conventional Carbon Black instead of the low-OAN carbon black.

**13.** The thermoplastic composition according to any of claims 1 to 12, wherein the composition has an L* value of less than 55 as tested in accordance with ASTM D1238.

**14.** An article comprising the thermoplastic composition according to any of claims 1 to 13.

**15.** The article of claim 14, wherein the article is a component of a telecommunications device.

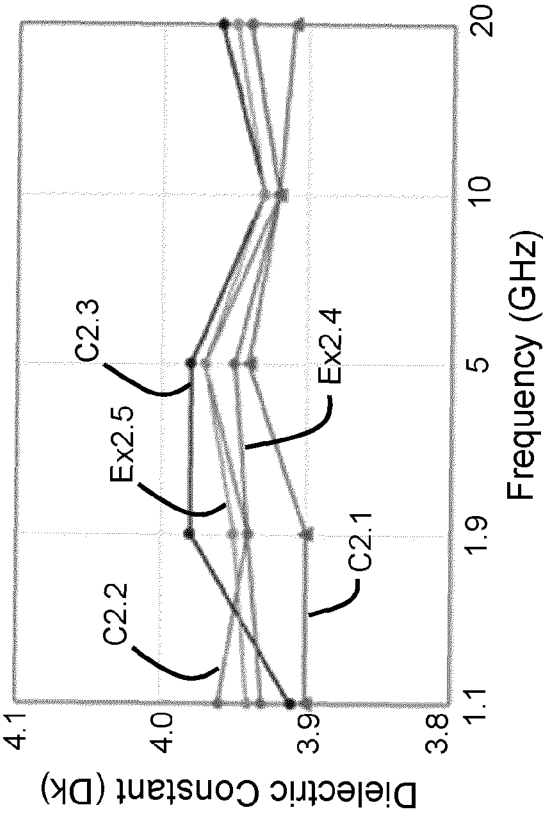
Dielectric Constant (Dk)
4.1
4.0
3.9
3.8
1.1
1.9
5
10
20
Frequency (GHz)
C2.2
C2.1
Ex2.5
C2.3
Ex2.4

FIG. 1A

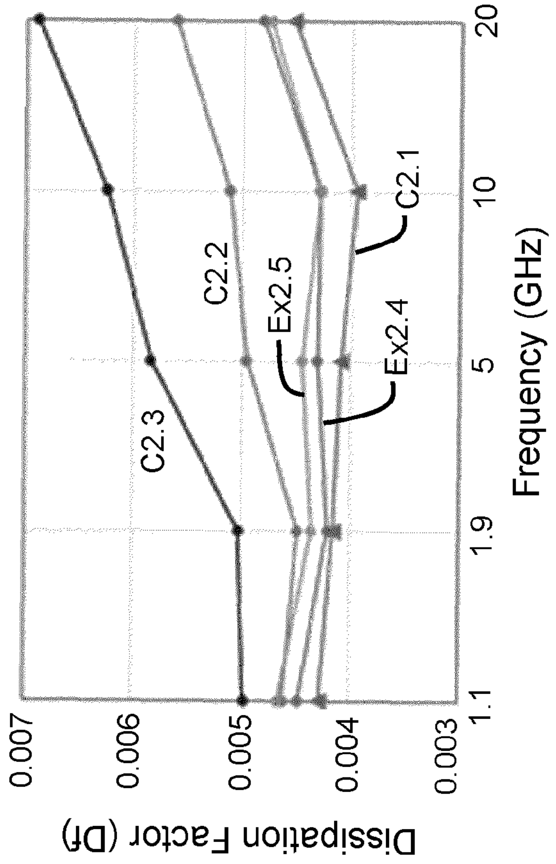
Dissipation Factor (Df)
0.007
0.006
0.005
0.004
0.003
1.1
1.9
5
10
20
Frequency (GHz)
C2.3
C2.2
Ex2.5
Ex2.4
C2.1

FIG. 1B

Europäisches Patentamt
European Patent Office
Office européen des brevets

# EUROPEAN SEARCH REPORT

Application Number
EP 21 19 2888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/118706 A1 (SHIMOMAI KEN [JP] ET AL) 16 April 2020 (2020-04-16)<br>* paragraph [0032] - paragraph [0043] *<br>* table A *<br>* examples A1-A10; tables 1,2 *<br>* example B *<br>* claims 1,2,5,7,11-19 *<br>----- | 1,2,4-15 | INV.<br>C08K3/04 |
| X | DATABASE WPI<br>Week 202105<br>Thomson Scientific, London, GB;<br>AN 2021-66440W<br>XP002805403,<br>-& KR 2021 0067462 A (LOTTE CHEM CORP) 8 June 2021 (2021-06-08)<br>* abstract *<br>* paragraph [0061] - paragraph [0062]; examples 1-3; table 1 *<br>----- | 1-5,<br>10-15 | |
| X | JP 2020 125459 A (HITACHI METALS LTD) 20 August 2020 (2020-08-20)<br>* examples 1-11; table 1 *<br>----- | 1-5,7,14 | TECHNICAL FIELDS SEARCHED (IPC)<br>C08K |
| X | EP 2 617 772 A1 (MITSUBISHI ENG PLASTICS CORP [JP]) 24 July 2013 (2013-07-24)<br>* example 21; table 1 *<br>----- | 1-5,7,14 | |
| A | US 2013/106659 A1 (YUNG PAUL C [US] ET AL) 2 May 2013 (2013-05-02)<br>* paragraph [0042] *<br>* examples 7-16 *<br>-----<br>-/-- | 1-15 | |

1 The present search report has been drawn up for all claims

| Place of search | Date of completion of the search | Examiner |
|---|---|---|
| Munich | 21 January 2022 | Russell, Graham |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 21 19 2888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DATABASE WPI<br>Week 201883<br>Thomson Scientific, London, GB;<br>AN 2018-90124H<br>XP002805412,<br>-& KR 101 919 279 B1 (YEOL P J)<br>15 November 2018 (2018-11-15)<br>* abstract *<br>* examples 4-6; tables 5-7 *<br>* claims 1,7 *<br>----- | 1-15 | |
| | | | TECHNICAL FIELDS SEARCHED (IPC) |

1 The present search report has been drawn up for all claims

| Place of search | Date of completion of the search | Examiner |
|---|---|---|
| Munich | 21 January 2022 | Russell, Graham |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO.

EP 21 19 2888

This annex lists the patent family members relating to the patent documents cited in the above-mentioned European search report. The members are as contained in the European Patent Office EDP file on
The European Patent Office is in no way liable for these particulars which are merely given for the purpose of information.

21-01-2022

| Patent document cited in search report | Publication date | Patent family member(s) | Publication date |
|---|---|---|---|
| US 2020118706 A1 | 16-04-2020 | CN 104995262 A | 21-10-2015 |
| | | EP 2957602 A1 | 23-12-2015 |
| | | JP 6319287 B2 | 09-05-2018 |
| | | JP WO2014125992 A1 | 02-02-2017 |
| | | KR 20150118116 A | 21-10-2015 |
| | | TW 201500425 A | 01-01-2015 |
| | | US 2015380125 A1 | 31-12-2015 |
| | | US 2020118706 A1 | 16-04-2020 |
| | | WO 2014125992 A1 | 21-08-2014 |
| KR 20210067462 A | 08-06-2021 | NONE | |
| JP 2020125459 A | 20-08-2020 | NONE | |
| EP 2617772 A1 | 24-07-2013 | CN 103108917 A | 15-05-2013 |
| | | EP 2617772 A1 | 24-07-2013 |
| | | JP 5761645 B2 | 12-08-2015 |
| | | JP WO2012035976 A1 | 03-02-2014 |
| | | KR 20130102561 A | 17-09-2013 |
| | | WO 2012035976 A1 | 22-03-2012 |
| US 2013106659 A1 | 02-05-2013 | CN 103906803 A | 02-07-2014 |
| | | JP 6152114 B2 | 21-06-2017 |
| | | JP 2015502418 A | 22-01-2015 |
| | | KR 20140091029 A | 18-07-2014 |
| | | TW 201323503 A | 16-06-2013 |
| | | US 2013106659 A1 | 02-05-2013 |
| | | WO 2013066663 A2 | 10-05-2013 |
| KR 101919279 B1 | 15-11-2018 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS,* 80-05-7